# EUROPÄISCHE PATENTSCHRIFT

(11) **EP 0 894 115 B1**
(45) Veröffentlichungstag und Bekanntmachung des Hinweises auf die Patenterteilung: **27.06.2001**
(21) Anmeldenummer: 97920685.1
(22) Anmeldetag: 15.04.1997
(51) Int. Cl.: C08L 51/00, C08F 265/06, C08L 55/02

(54) **FORMMASSEN ZUR HERSTELLUNG VON FORMTEILEN MIT VERMINDERTEM OBERFLÄCHENGLANZ**
CASTING COMPOUNDS FOR THE PRODUCTION OF MOULDINGS WITH REDUCED SURFACE GLOSS
MATIERES DE MOULAGE POUR PRODUIRE DES PIECES MOULEES A ECLAT SUPERFICIEL REDUIT

(30) Priorität: 15.04.1996 DE 19614844
(43) Veröffentlichungstag der Anmeldung: 03.02.1999
(73) Patentinhaber: BASF AKTIENGESELLSCHAFT, 67056 Ludwigshafen (DE)
(72) Erfinder: MC KEE, Graham, Edmund, D-67433 Neustadt (DE); ROSENAU, Bernhard, D-67434 Neustadt (DE); HECKMANN, Walter, D-69469 Weinheim (DE)
(74) Vertreter: Kinzebach, Werner, Dr.
(86) Internationale Anmeldenummer: EP9701875
(87) Internationale Veröffentlichungsnummer: WO9739062

(56) Entgegenhaltungen:
- EP-A- 0 381 358
- EP-A- 0 522 791
- EP-A- 0 621 291
- EP-A- 0 654 454
- EP-A- 0 769 524
- DE-B- 1 182 811
- US-A- 4 798 869

## Beschreibung

Die Erfindung betrifft Formmassen auf der Basis von Polymeren bzw. Polymermischungen, die in hinreichender Menge eine matte Formmasse auf Basis eines Pfropfpolymerisats als Mattierungsmittel eingemischt enthalten und zu Formteilen mit geringem Oberflächenglanz verarbeitet werden können.

Copolymere aus Alkenylaromaten und Nitrilen und/oder Estern der Acrylsäure oder Methacrylsäure finden für die Herstellung technischer Formteile vielfache Verwendung. Da die Formteile oft auch schlagfest sein sollen, werden dann die genannten Copolymeren gemischt mit sogenannten kautschukmodifizierten Copolymeren, bei denen harte Polymere bildende Monomere wie Styrol, Methylstyrol, Acrylnitril und Methylmethacrylat auf ein Elastomeres aufgepfropft werden. Es resultieren Polymere mit einer Hartphase und einer Weich- oder Kautschukphase. Für die Kautschukphase als Pfropfgrundlage werden als Elastomere insbesondere Polybutadien, Ethylen-Propylen-Copolymere, Ethylen-Propylen-Dien-Copolymere sowie elastomere Acrylester-Copolymere verwendet. Die resultierenden Polymergemische sind als ABS-, AES- oder ASA-Polymere seit langem im Handel.

Sie haben jedoch für manche Verwendungen den Nachteil, daß daraus hergestellte Formteile einen hohen Oberflächenglanz aufweisen und einfallendes Licht reflektieren.

Zur Verringerung des oft unerwünschten Oberflächenglanzes der Plastikformteile ist es bekannt, deren Oberfläche mit Prägungen oder einem matten Überzug zu versehen oder den sie bildenden Plastikformmassen anorganische Füllstoffe, vernetzte Polymere oder Gummikomponenten zuzusetzen. Die Methoden sind unbefriedigend, da sie teils arbeitsaufwendig sind, teils führen sie unter den Verarbeitungsbedingungen zu uneinheitlichen Oberflächen oder zu Formteilen mit ungenügender Schlagzähigkeit. Die DE-A 42 31 995 beschreibt Mattierungsmittel aus in Emulsion polymerisierten Methacrylaten. Sie enthalten keinen Kautschuk, sind spröde und verschlechtern die Zähigkeit der Endprodukte. Die Herstellung von matten Pfropfcopolymerisaten auf der Basis von Polybutadien ist seit einigen Jahren aus der EP-A 0201 099, EP-A 0328 960 und EP-A 0381 358 bekannt. Gemäß der EP-A 0381 358 werden Vinylaromaten mit ungesättigten Nitrilen in Gegenwart von 5 bis 15 Gew.% eines speziellen Polybutadiens bis zu einem Umsatz von 1 bis 15 Gew.% der Monomerenmenge in Substanz und danach in Suspension polymerisiert. Nachteilig bei diesem Verfahren ist, daß eine höhere Konzentration an Polybutadien zu Störungen führt, das Verfahren nur mit speziellen Polybutadienen mit niedrigem cis-Gehalt, nicht aber mit anderen Polybutadienen und auch nicht mit styrolhaltigem Butadienkautschuk (SBR) funktioniert. Auch ist die Einhaltung der niedrigen Umsatzgrenzen bei der Substanzpolymerisation zur Erzielung der gewünschten Resultate äußerst kritisch. Die gemäß den EP-A 0201 099, 0328 960 und 0381358 erhaltenen Mattierungsmittel haben alle den schwerwiegenden Nachteil, daß sie nicht witterungsbeständig sind, sich verfärben und ihre Schlagzähigkeit nachläßt.

Aus der US-A 4 857 591 ist bekannt, als Mattierungsmittel für Polymere ein hydriertes Butadien-Acrylnitril-Copolymeres zu verwenden. Öfter enthalten solche hydrierten Copolymeren aber noch restliche C=C-Doppelbindungen, als Folge davon sich die Stabilität der Copolymeren bei Bewitterung verschlechtert. Auch haben diese Mattierungsmittel eine dunklere Farbe, die sich in den Endprodukten bemerkbar macht.

Der vorliegenden Erfindung lag die Aufgabe zugrunde, für Polymere und Polymermischungen polymere Zusätze als Mattierungsmittel zu finden, die selbst witterungsbeständig sind, schlagzäh sind und auch nach Bewitterung schlagzäh bleiben und sich nicht verfärben. Besonders sollten sie zur wirksamen Mattierung von ASA-Polymeren geeignet sein.

Es wurde nun gefunden, daß speziell hergestellte mit Acrylesterpolymerisaten modifizierte matte Formmassen als witterungsbeständige Mattierungsmittel für Polymere und Polymermischungen verwandt werden können.

Gegenstand der Erfindung sind für die Herstellung von Formteilen mit vermindertem Oberflächenglanz geeignete Formmassen (F) auf der Basis von Polymeren oder Polymermischungen (P), die in hinreichender Menge eine matte Formmasse (A) auf Basis eines Pfropfcopolymerisats als Mattierungsmittel eingemischt enthalten, die dadurch gekennzeichnet sind, daß die matte Formmasse (A) hergestellt wurde durch ein- oder mehrstufige Polymerisation einer Mischung (AM) enthaltend
a) ein oder mehrere die Pfropfschale (A1) bildende olefinisch ungesättigte Monomere (A1m), die ein Polymerisat oder Copolymerisat mit einer Glasübergangstemperatur von mindestens +20°C bilden,
b) ein in dem oder den Monomeren (A1m) gelöstes oder gequollenes fertiges Acrylestercopolymerisat (A2) als Pfropfgrundlage, das eine Glasübergangstemperatur von unter -20°C aufweist, wobei die Polymerisation der Mischung (AM) zumindest in der ersten Stufe und bis zu einem Umsatz von mehr als 15 Gew.% der Monomeren als thermisch oder radikalisch initiierte Polymerisation in Substanz oder Lösung durchgeführt wurde.

Ein weiterer Gegenstand der vorliegende Erfindung ist die Verwendung der vorstehend angegebenen speziell hergestellten Formmasse (A) als Mattierungsmittel für Formmassen (F) auf der Basis von Polymeren oder Polymermischungen (P).

Aus der vor über 30 Jahren veröffentlichten DE-A 11 82 811 ist bekannt, zur Herstellung des Acrylkautschuks den Acrylester mit einem vernetzenden Monomeren in Lösung zu polymerisieren, wobei in den Beispielen bereits nach einem Umsatz von 20 bis 40 Gew.% der Monomeren die aufzupfropfenden Monomeren Styrol und Acrylnitril zugegeben werden, deren Polymerisation dann in Substanz oder Lösung durchgeführt wird. Dies führt jedoch wegen der nicht-konstanten Monomeren-Zusammensetzung während der Pfropfungsreaktion und auch wegen des Einpolymerisierens von Acrylester-Einheiten in die Pfropfschale zu einer Herabsetzung der Vicat-Erweichungstemperatur und einer Verschlechterung weiterer mechanischer Eigenschaften der resultierenden Formmassen. Im Unterschied dazu wird bei der erfindungsgemässen Pfropfpolymerisation der Monomeren (A1m) auf das ggf. modifizierte Acrylesterpolymerisat (A2) von einem fertig polymerisierten Acrylesterpolymerisat ausgegangen, so daß bei der Polymerisation der Pfropfmonomeren praktisch keine Acrylester-Monomeren mehr vorhanden sind.

Das für die Herstellung der erfindungsgemässen matten Formmasse (A) verwendete Acrylesterpolymerisat (A2) ist überwiegend aus Monomeren (A2m1) der Formel CH₂ = CR¹ - COOR² hergestellt, worin R¹ ein Wasserstoffatom oder eine Methylgruppe und R² einen Alkylrest mit 1 bis 12 C-Atomen bedeuten. Besonders geeignet sind Acrylester mit einem linearen oder höchstens einfach verzweigten Alkylalkohol mit 4 bis 12 C-Atomen. Bevorzugte Monomere sind Acrylester des n-Butylalkohols und 2-Ethylhexylalkohols. Durch die Auswahl von Acrylestern, Methacrylestern oder Mischungen davon, kann bei gegebenem Gehalt bestimmter Comonomerer, die Glasübergangstemperatur des resultierenden Acrylesterpolymerisats (A2) eingestellt werden, wobei diese insbesondere bei unter -10°C und bevorzugt bei unter -20°C liegen soll. Die Möglichkeit der Einstellung der Glasübergangstemperatur beruht darauf, daß die Glasübergangstemperatur von Acrylester- und Methacrylester-Polymerisaten mit zunehmender Länge der Alkylseitenketten zunächst abnimmt, bei C₇-Acrylat bzw. C₁₀-Methacrylat ein Minimum durchläuft und dann wieder steigt. Im allgemeinen beträgt der Gehalt an Alkylacrylat bzw. -methacrylat im Acrylesterpolymerisat (A2) 50 bis 100 Gew.%, bevorzugt mindestens 70 Gew.%.

Mit Vorteil enthält das Acrylesterpolymerisat (A2) weitere Monomere einpolymerisiert. Als solche sind Monomere (A2m2) mit mindestens zwei olefinisch ungesättigten Doppelbindungen sehr geeignet, wie Allylmethacrylat oder -acrylat, 1,4-Butandioldimethacrylat oder -acrylat, Divinylbenzol, Triallylcyanurat, Diallylmaleat, Diallylphthalat und Dihydrodicyclopentadienylacrylat oder -methacrylat. Bevorzugt werden davon Monomere mit nicht-konjugierten C=C-Doppelbindungen und insbesondere Allylmethacrylat und Dihydrodicyclopentadienylacrylat oder -methacrylat. Das Acrylesterpolymerisat (A2) enthält die Comonomeren (A2m2) in einer Menge von 0 bis 20 und insbesondere in einer Menge von 0,3 bis 12 Gew.%, bezogen auf das Acrylesterpolymerisat (A2), einpolymerisiert.

Als sehr vorteilhaft hat sich gezeigt, wenn in das Acrylesterpolymerisat (A2) ein olefinisch ungesättigtes Comonomeres (A2m3) mit einer chemisch-reaktiven Gruppe (A2m3x) in einer Menge von 1 bis 25 und insbesondere 3 bis 15 Gew.%, bezogen auf das Acrylesterpolymerisat (A2), einpolymerisiert wurde. Beispiele solcher chemisch-reaktiven Gruppen sind Epoxid-, Amino-, Amid-, Hydroxyl-, Carbonsäureanhydrid und Carboxylgruppen, bevorzugt Epoxid-, Hydroxyl- oder Carbonsäureanhydridgruppen. Beispiele von Comonomeren (A2m3) sind olefinisch ungesättigte Glycidylester und Glycidylether wie Glycidylmethacrylat oder -acrylat, Aminoalkyl(meth)acrylsäureester und -amide wie N-2-Aminoethylmethacrylamid oder Aminohydroxypropylmethacrylat, ferner 2-Hydroxyethylmethacrylat oder -acrylat, Acrylamid oder Methacrylamid, N-Hydroxymethyl(meth)acrylamid, deren Ether und Ester wie N-Methoxymethylacryl- oder -methacrylamid, Maleinsäureanhydrid, Acrylsäure, Methacrylsäure oder Crotonsäure. Der Vorteil der Einpolymerisation solcher chemisch-reaktiven Monomerer (A2m3) ist in einer verstärkten Bindung zwischen Acrylesterpolymerisat (A2) als Pfropfgrundlage und der Pfropfschale (A1) zu sehen, wenn den Pfropfmonomeren (A1m) Monomere mit chemisch-reaktiven Gruppen (A1mf) oder Polymere mit chemisch-reaktiven Gruppen (A1Pf) zugegeben werden, wie es weiter unten im Zusammenhang mit den Monomeren für die Pfropfschale (A1m) näher erläutert wird.

Eine verbesserte Pfropfung von Monomeren auf das Acrylesterpolymerisat (A2) als Pfropfgrundlage kann auch erzielt werden, wenn das Acrylesterpolymerisat (A2) mindestens ein Comonomeres (A2m4) mit einer Gruppe einpolymerisiert enthält, die bei der Pfropfpolymerisation durch thermische Zersetzung Radikale bildet und die Polymerisation von olefinisch ungesättigten Monomeren (A1m) für die Bildung der Polymerschale initiieren kann. Geeignete Monomere (A2m4) sind insbesondere Monomere mit Peroxy- oder Azogruppen. Als Beispiele solcher Monomerer (A2m4) seien tert.-Butyl-3-isopropenylcumylperoxid, tert.- Butylperoxycrotonat und tert.-Butylmonoperoxymaleat genannt.

Die Polymerisation bzw. Copolymerisation der Monomeren für die Herstellung des Acrylesterpolymerisats kann in bekannter Weise, bevorzugt als Polymerisation in Substanz, Lösung oder Emulsion, durchgeführt werden und wird insbesondere mit üblichen Radikalinitiatoren gestartet. Die chemisch-reaktiven Gruppen der Comonomeren (A2m3) und die Radikale bildenden Gruppen der Comonomere (A2m4) sollen dabei erhalten bleiben, was die Auswahl geeigneter niedriger Polymerisationstemperaturen und dabei wirksamer Radikalinitiatoren bedingt.

Nach der fertigen Herstellung und ggf. erforderlichen Entfernung von Restmonomeren bzw. Isolierung des Acrylesterpolymerisats (A2), wird das Acrylesterpolymerisat (A2) in den später die Pfropfschale (A1) bildenden Monomeren (A1m) gelöst oder zumindest gut gequollen, ggf. unter Rühren und/oder Erwärmung und/oder Zusatz erforderlicher Mengen eines geeigneten inerten Lösungsmittels oder Lösungsmittelgemischs. Dabei soll die Lösungsmittelmenge im allgemeinen 50 Gew.-% der Summe der Mengen an Monomeren (A1m) und Acrylesterpolymerisat (A2) nicht überschreiten.

Als Monomere (A1m), die später im wesentlichen die harte Pfropfschale bilden, sind Monomere und Monomermischungen geeignet, die ein Polymeres bzw. Copolymeres mit einer Glasübergangstemperatur von über + 20°C und bevorzugt von über + 50°C bilden. Bevorzugt sind ferner Monomere (A1m), deren Polymere bzw. Copolymere mit den Polymeren bzw. Polymermischungen (P) voll oder teilweise verträglich sind. Beispiele geeigneter Monomerer (A1m) sind vor allem Alkenylaromaten, wie Styrol, α-Methylstyrol, kernalkylierte Styrole mit 1 bis 4 C-Atomen im Alkylrest oder Chlorstyrol, Nitrile der Acryl- bzw. Methacrylsäure, insbesondere Acrylnitril und niedere Methacrylate mit 1-4 C-Atomen im Alkylrest, bevorzugt Methylmethacrylat, sowie Mischungen davon. Bevorzugt ist, als Monomere (A1m) eine Mischung von Styrol und/oder α-Methylstyrol mit Acrylnitril zu verwenden, in der das Styrol und/oder α-Methylstyrol insbesondere in einer Menge von 50 bis 80 Gew.% und das Acrylnitril in einer Menge von 20 bis 50 Gew.% der Mischungsmenge vorliegt. In untergeordneter Menge, insbesondere bis zu 25 Gew.-% der Gesamtmonomerenmenge von (A1m) können auch 5 weitere Monomere als Pfropfmonomere (A1m) mitverwendet werden, z.B. N-Phenylmaleinimid.

Die Menge der Monomeren (Alm) in der Mischung (AM) richtet sich insbesondere nach dem gewünschten Gehalt der resultierenden Formmasse (A) an Acrylkautschuk (A2). Im allgemeinen beträgt die Gewichtsmenge der Monomeren (A1m) zur Erzielung einer hinreichenden Pfropfschale (A1) etwa 2 bis 45 und insbesondere 5 bis 25 Gew.%, bezogen auf die Summe der Mengen an Acrylkautschuk (A2) und Monomeren (A1m), grössere Mengen vermehren den stets vorhandenen Anteil an Copolymerisaten aus den Monomeren (A1m) (Polymermatrix) in der resultierenden Formmasse (A).

Wird von einer bevorzugten Ausführungsform der Erfindung Gebrauch gemacht und ein Acrylesterpolymerisat (A2) verwendet, das Comonomere (A2m3) mit chemisch-reaktiven Gruppen (A2m3x) einpolymerisiert enthält, so wird vor, beim oder nach dem Lösen oder Quellen des Acrylestercopolymerisats (A2) in den die Pfropfschale bildenden Monomeren (A1m) diesen Monomeren in untergeordneter Menge, insbesondere in einer Menge von 1 bis 25 Gew.% der Gesamtmonomerenmenge der Mischung (AM) ein Monomeres (A1mf) und/oder ein mit den Monomeren (A1m) voll oder teilweise verträgliches Polymeres (A1Pf) zugemischt, von denen jedes eine chemisch-reaktive Gruppe (A1fx) enthält, die mit den chemisch-reaktiven Gruppen (A2m3x) des Acrylestercopolymerisats (A2) reagieren können oder die mit Hilfe eines der Mischung (AM) zugesetzten polyfunktionellen Vernetzers (AMV) eine Kopplung mit den chemisch-reaktiven Gruppen (A2m3x) des Acrylestercopolymerisats (A2) ermöglichen. Ein polyfunktioneller Vernetzer (AMV) enthält mindestens zwei chemisch-reaktive Gruppen, die sowohl mit den chemisch-reaktiven Gruppen (A1m3x) des Acrylestercopolymerisats (A2) als auch mit den chemisch-reaktiven Gruppen (A1fx) der zugesetzten Monomeren (Almf) und/oder Polymeren (A1Pf) reagieren, insbesondere während der Polymerisationsreaktion. Ein geeigneter Vernetzer (AMV) ist z.B. ein Diamin oder Polyamin mit mindestens zwei primären oder sekundären Aminogruppen wie Alkylendiamine und insbesondere Ethylendiamin, wenn die reaktiven Gruppen (A2m3x) im Acrylestercopolymerisat (A2) und die reaktiven Gruppen im Monomeren (A1mf) und/oder Polymeren (A1Pf) z.B. Epoxid-Gruppen oder Carbonsäureanhydrid-gruppen sind.

Wird kein polyfunktioneller Vernetzer (AMV) mitverwendet und enthält das Acrylestercopolymere (A2) als chemisch-reaktive Gruppen (A2m3x) Epoxidgruppen, so eignet sich ein Zusatz von Monomeren (A1mf) und/oder Polymeren (A1Pf), die z.B. Amino-, Hydroxyl-, Amid-, Carboxyl- oder Carbonsäureanhydrid-Gruppen enthalten, wie β-Hydroxyethylmethacrylat oder -acrylat und deren (Co)Polymere, 5 Aminoalkyl-methacrylamide oder -acrylamide und deren Copolymere, Maleinsäureanhydrid und dessen Copolymere, Acryl- oder Methacrylsäure und deren Copolymere.

Die Polymerisation der Monomeren (A1m) in Gegenwart des in diesen Monomeren gelösten oder gut gequollenen Acrylesterpolymerisats (A2) erfolgt (ggf. nach Zusatz von einem Polymeren (A1Pf)) als thermisch oder radikalisch initiierte Polymerisation bei einer Temperatur im Bereich von etwa 50 bis 200°C und insbesondere von 60 bis 160°C. Dabei kann die Polymerisation in einer oder mehreren Stufen erfolgen. Die Polymerisation zumindest in der ersten Stufe und zumindest bis zu einem Umsatz von über 15 und bevorzugt über 20 bis 40 Gew.% der Monomeren ist immer als thermisch oder radikalisch initiierte Polymerisation in Substanz (Massenpolymerisation) oder als Lösungspolymerisation durchzuführen. Die Polymerisation kann ganz als Polymerisation in Substanz oder Lösung durchgeführt werden, aber kann auch, wenn gewünscht, nach dieser ersten Stufe mit einer anderen Polymerisationsmethode fortgeführt und beendet werden, wobei die Fortführung und Beendigung der Polymerisation nach der ersten Stufe bevorzugt als Suspensionspolymerisation erfolgt.

Die Polymerisation in Substanz oder Lösung wird bevorzugt unter Rühren und unter Stickstoff durchgeführt. Wird nach der ersten Polymerisationsstufe die Polymerisation z.B. als Suspensionspolymerisation fortgeführt, so sind neben Wasser natürlich die üblichen Zusatzstoffe dafür dem Polymerisationsansatz zuzufügen, wie Suspensionsstabilisatoren, Oxidationsstabilisatoren, Regler und Initiatoren wie Peroxide. Schließlich werden die resultierenden Formmassen (A) isoliert bzw. abfiltriert und getrocknet..

Die erfindungsgemässen Formmassen (F) enthalten in der Mischung Polymere oder Polymermischungen (P), bevorzugt in einer Menge von 40 bis 99 und insbesondere 50 bis 97 Gew.%, bezogen auf die Mischung (P) + (A). Sehr geeignete Polymere und Polymermischungen (P) sind solche mit einer Glasübergangstemperatur von mindestens +50°C. Sehr geeignete Polymere (P) sind Polymere (P1), hergestellt aus einer Mischung (P1M) von
- (P1m1): 30 bis 95, insbesondere 50 bis 90 und besonders bevorzugt 60 bis 80 Gew.Teilen mindestens eines alkenylaromatischen Monomeren der Formel 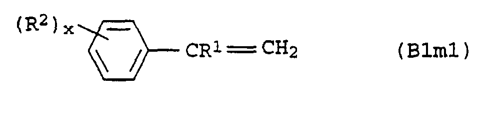 worin R¹ ein Wasserstoffatom oder eine Methylgruppe, R² eine Alkylgruppe mit 1 bis 4 und -insbesondere 1 bis 2 C-Atomen oder ein Chloratom bedeuten und x für 0, 1 oder 2 steht,
- (P1m2): 0 bis 50, insbesondere 15 bis 50 und besonders bevorzugt 20 bis 40 Gew.Teile Methacrylnitril oder Acrylnitril,
- (P1m3): 0 bis 50 und bevorzugt 0 bis 40 Gew.Teile eines Esters der Methacrylsäure oder Acrylsäure mit einer Hydroxylverbindung mit 1 bis 4 C-Atomen, und
- (P1m4): 0 bis 40 und bevorzugt 0 bis 30 Gew.Teile eines weiteren olefinisch ungesättigten Comonomere mit 2 bis 20 C-Atomen.

Beispiele von Monomeren (P1m1) sind p-Methylstyrol, p-tert.-Butylstyrol, 2,4-Dimethylstyrol, α-Methylstyrol und bevorzugt Styrol. Als Monomeres (P1m2) ist Acrylnitril bevorzugt. Als Beispiele für Monomere (P1m3) seien tert.-Butylacrylat und -methacrylat, Glycidylmethacrylat, Ethylmethacrylat und als bevorzugtes Monomeres Methylmethacrylat genannt. Als Beispiele weiterer Monomerer (P1m4) seien insbesondere Methacrylamid und Acrylamid, N-Phenylmaleinimid und als bevorzugtes Monomeres (P1m4) Maleinsäureanhydrid genannt.

Besonders geeignete Copolymerisate (P1) sind Copolymerisate aus einer Mischung (P1M) von 60 bis 80 Gew.% Styrol und 20 bis 40 Gew.% Acrylnitril.

Als Polymere (P) sind besonders geeignet sogenannte ASA-Polymere, die durch Pfropfcopolymerisation von eine harte Pfropfschale bildenden Monomeren wie Styrol und Acrylnitril auf ein elastomeres Acrylesterpolymerisat als Pfropfgrundlage hergestellt sind. Die Herstellung der ASA-Polymeren und die Durchführung der Pfropfcopolymerisation auf die elastomeren Acrylesterpolymerisate, die meist als Emulsionspolymerisation erfolgt, ist vielfach in der Polymerliteratur beschrieben, wobei als elastomere Acrylesterpolymerisate solche aus n-Butylacrylat und/oder 2-Ethylhexylacrylat, die 0,5 bis 10 Gew.%, bezogen auf die Gesamtmonomerenmenge, an olefinisch ungesättigten Monomeren mit mindestens zwei C=C-Doppelbindungen einpolymerisiert enthalten, sehr geeignet sind.

Allgemein enthalten die Pfropfcopolymerisate auch bestimmte Mengen an Copolymerisaten aus den für die harte Pfropfschale verwendeten Monomeren, wie Styrol-Acrylnitril-Copolymerisate, deren 5 Menge insbesondere von der für die Pfropfcopolymerisation im Überschuß eingesetzten Menge an Pfropfmonomeren abhängt. Meist sind sie aber auch mit zugesetzten Copolymerisaten solcher Monomerer wie Styrol-Acrylnitril-Copolymerisaten als sogenannte Hartmatrix abgemischt.

Zur weitergehenden Beschreibung von ASA-Polymeren wird auf die einschlägige Patentliteratur verwiesen, z.B. auf die DE-A 19 11 882, DE-A 28 26 925, DE-A 31 29 378, DE-A 31 29 472, DE-A 31 49 046, DE-A 31 49 358, DE-A 32 06 136 oder die DE-A 32 27 555.

Die Polymeren (P) können auch Abmischungen mit anderen verträglichen oder teilverträglichen Polymertypen darstellen, wie Abmischungen mit Polycarbonaten, Polyphenylenethern, Polymethylmethacrylaten oder AES-Polymeren. AES-Polymere sind Polymere, die in einer Hartphase aus einem Copolymerisat aus Styrol, Acrylnitril und/oder Methylmethacrylat eine Kautschukphase feinverteilt enthalten, die ein Pfropfcopolymerisat darstellt mit einer Pfropfschale aus dem oder den die Hartphase bildenden Monomeren wie Styrol, Acrylnitril und/oder Methylmethacrylat und einem Ethylen-Propylen- oder Ethylen-Propylen-Dien-Copolymerem als Pfropfgrundlage.

Bevorzugt besteht das thermoplastische Polymere (P) zumindest aus 30 und bevorzugt zumindest aus 50 Gew.% aus einem ASA-Polymeren und/oder Copolymeren, das überwiegend Styrol und Acrylnitril eini polymerisiert enthält.

Die Formmasse (A), das Mattierungsmittel, kann dem oder den Polymeren (P) auf geeigneten Mischaggregaten wie Schnecken, Knetern oder auf Walzen eingemischt werden, z.B. in einem ZSK 30 Extruder der Fa. Werner und Pfleiderer. In wässriger Dispersion erhaltene Komponenten können aber auch teilweise entwässert oder direkt als Dispersion mit der anderen Komponente der Mischung (A) + (P) vermischt werden, wobei dann während des Vermischens die vollständige Trocknung erfolgt.

Die erfindungsgemäße Formmasse (F) kann nach den bekannten Verfahren der Thermoplastverarbeitung verarbeitet werden, wie durch Extrudieren, Spritzgießen, Kalandrieren oder Pressen.

Bevorzugt werden aus den erfindungsgemäßen Formmassen (F) durch Spritzgiessen Formteile für den Automobilbau hergestellt.

Die matten Formmassen (F) der erfindungsgemäßen Mischungen weisen eine gute Schlagzähigkeit sowie ein gutes Fließverhalten auf. 5 Formteile aus den erfindungsgemässen Formmassen (F) haben den Vorteil, daß ihr Oberflächenglanz eingestellt werden kann und matte Oberflächen hergestellt werden können.

Die Erfindung wird durch die nachfolgenden Beispiele und Vergleichsversuche näher erläutert. Teile und Prozente beziehen sich, soweit nicht anders angegeben, auf das Gewicht.

Das verwendete handelsübliche Polyvinylpyrrolidon der BASF AG hatte einen K-Wert von 90 (nach Fikentscher, Cellulosechemie 13(1932)58).

Der verwendete Polyvinylalkohol (Moviol® 30-92 der Fa. Hoechst AG) hatte einen Hydrolysegrad von 92 Mol-% und eine Viskosität der 4%igen wässrigen Lösung bei 20°C von 30 m Pa.s.

Der Glanz wurde an 2 mm dicken Rundscheiben, die bei einer Temperatur der Kunststoffschmelze von 220°C und einer Formtemperatur von 30°C gespritzt wurden, nach DIN 67530 mit einem Dr.Lang-Reflektometer UME 1 unter einem Einstrahlwinkel von 45° bestimmt.

Die Bestimmung der Glasübergangstemperatur erfolgte mittels der DSC-Methode (K.H. Illers, Makromolekulare Chemie 127 (1969) Seite 1ff.).

Die Viskositätszahlen zη in ml/g wurden in 0,5 %iger Lösung in Dimethylformamid analog DIN 53726 gemessen.

### Beispiel 1 (Herstellung eines ASA-Polymeren (P))

Auf 60 Teile eines Copolymerisats aus 98 % n-Butylacrylat und 2% Dihydrodicyclopentadienylacrylat wurde in Emulsion eine erste Pfropfschale aus 13 Teilen Styrol und eine zweite Pfropfschale aus 27 Teilen eines Styrol-Acrylnitril-Gemischs (Gewichtsverhältnis 75 : 25) aufgepfropft. Das resultierende Pfropfpolymerisat hatte eine Teilchengröße von 0,45 µm.

50 Teile dieses Pfropfpolymerisats wurden mit 50 Teilen eines Styrol-Acrylnitril-Copolymerisats (Gewichtsverhältnis 65:35, Viskositätszahl: 80 ml/g) in einem Extruder gemischt, extrudiert und granuliert. Den Oberflächenglanz dieses ASA-Polymeren (P) zeigt Tabelle 1.

### Beispiel 2 (Herstellung einer Formmasse (A))

### a) Herstellung des Acrylestercopolymerisats (A2)

1685 g Toluol wurden in einen Kolben eingefüllt, unter Stickstoff wurde auf 75°C erhitzt und anschließend wurden unter Rühren je 5% der nachstehenden Zuläufe 1 und 2 vorgelegt.

| Zulauf 1 | | Zulauf 2 | |
|---|---|---|---|
| 750 g | n-Butylacrylat | 818 mg | Azoisobutyronitril |
| 17,6 g | Allylmethacrylat | 40 ml | Toluol |
| 60 g | Hydroxypropylmethacrylat | 40 ml | Aceton |

Während der nächsten 4 Stunden wurde dann der Rest der Zuläufe 1 und 2 kontinuierlich zudosiert. Nach insgesamt 8 Stunden Polymerisationszeit bei 75°C wurde der Ansatz gekühlt und mit 0,12 % (bezogen auf die Menge der Monomeren) 3-(3,5-Di-tert.butyl-4-hydroxyphenyl)propionsäureoctadecylester stabilisiert. Der Umsatz betrug 95 %.

### b) Herstellung der Formmasse (A)

In einem Rotationsverdampfer wurde unter Vakuum das Toluol, Aceton und gegebenenfalls vorhandenes Restmonomeres aus dem Ansatz a) entfernt und durch zugesetzte Monomere ausgetauscht, daß eine Mischung (AM) von 1272 g Styrol, 424 g Acrylnitril und 77 g Maleinsäureanhydrid resultierte, in der 150 g des Acrylestercopolymerisats (A2) gelöst bzw. gequollen vorlagen. Die Mischung wurde in einen Stahlkessel eingefüllt und unter Stickstoff und Rühren auf 123°C erhitzt. Nach ca. 20 % Umsatz der Monomeren wurden 1,49 g tert.- Dodecylmercaptan und 2,31 g 3-(3,5-Di-tert.-butyl-4-hydroxyphenyl)propionsäureoctadecylester als Antioxydans und nach 20 % Umsatz 1,93 g Dicumylperoxid zugegeben. Nach einem Umsatz von insgesamt 33,9 % der Monomeren erfolgte eine Zugabe von 1900 g Wasser, 2,0 g Tetranatriumdiphosphat, 20 g Polyvinylpyrrolidon und 59,8 g von einer 10 %igen wässrigen Lösung von Polyvinylalkohol. Die Mischung wurde dann 3 Stunden bei 110°C, weitere 3 Stunden bei 130°C und weitere 6 Stunden bei 140°C auspolymerisiert. Danach wurde gekühlt, das Polymere abfiltriert und getrocknet. Der Oberflächenglanz eines Formteils aus einer Abmischung dieses Mattierungsmittels mit dem ASA-Polymeren (B) ist in Tabelle 1 angegeben.

### Beispiel 3 (Herstellung einer matten Formmasse (A))

### a) Herstellung eines Acrylestercopolymerisats (A2)

1753 g Cyclohexan wurden in einen Kolben eingefüllt, unter Stickstoff wurde auf 75°C erhitzt und anschließend wurden unter Rühren je 5 % der nachstehenden Zuläufe 1 und 2 vorgelegt.

| Zulauf 1 | | Zulauf 2 | |
|---|---|---|---|
| 750 g | n-Butylacrylat | 818 mg | Azobisisobutyronitril |
| 6,51 g | Allylmethacrylat | 40 ml | Aceton |
| 22,5 g | Maleinsäureanhydrid | 40 ml | Toluol |

Während 4 Stunden wurde dann der Rest der Zuläufe 1 und 2 kontinuierlich zudosiert und nach insgesamt 8 Stunden Polymerisationszeit der Ansatz gekühlt und mit 0,12 % 3-(3,5-Di-tert.-butyl-4-hydroxyphenyl)propionsäureoctadecylester als Antioxydans stabilisiert. Der Monomerenumsatz betrug 95 %.

### b) Herstellung der Formmasse (A)

In einem Rotationsverdampfer wurde unter Vakuum das Cyclohexan, Toluol, Aceton und Restmonomere entfernt und dann gegen Monomere ausgetauscht, so daß eine Mischung von 150 g des Acrylestercopolymerisats (A2) gelöst bzw.gequollen in einer Mischung von 1247 g Styrol und 416 g Acrylnitril vorlag.

Dieser Mischung wurden 110 g eines Copolymerisats aus 72 % Styrol, 24 % Acrylnitril und 4 % Maleinsäureanhydrid als reaktives Polymerisat (A1Pf) und danach 9,3 g Ethylendiamin als Vernetzer (AMV) zugegeben. Die resultierende Mischung (AM) wurde in einen Stahlkessel eingefüllt und unter Stickstoff und Rühren auf 123°C erhitzt. Nach einem Umsatz von ca. 20 % der Monomeren wurden 1,49 g tert.- Dodecylmercaptan und 2,31 g 3-(3,5-Di-tert.-butyl-4-hydroxyphenyl)propionsäureoctadecylester als Antioxydans und nach 30 % Umsatz 1,7 g Dicumylperoxid zugegeben. Nach insgesamt 33 % Umsatz der Monomeren wuden 1900 g Wasser, 2,0 g Tetrannatriumdiphosphat, 20 g Polyvinylpyrrolidon und 20 g einer 10 %igen wässrigen Lösung von Polyvinylalkohol zugesetzt. Die Mischung wurde 3 Stunden bei 110°C, weitere 3 Stunden bei 130°C und weitere 6 Stunden bei 140°C auspolymerisiert.

Der Oberflächenglanz eines Formteils aus einer Abmischung dieses Mattierungsmittels (A) mit einem ASA-Polymeren (P) ist in Tabelle 1 angegeben.

### Beispiel 4 (Herstellung einer Formmasse (A))

### a) Herstellung eines Acrylestercopolymerisats (A2)

6528 g Cyclohexan wurden in einen Kolben eingefüllt, unter Stickstoff und Rühren wurde auf 75°C erhitzt und anschließend wurden unter Rühren je 5 % der nachstehenden Zuläufe 1 und 2 vorgelegt.

### Zulauf 1

3200 g n-Butylacrylat
26,12 g Allylmethacrylat
56,32 g tert.Butylperoxycrotonat
32,00 g tert.Butyl-3-isopropenylcumylperoxid

### Zulauf 2

3487 mg Azobisisobutyronitril
160 ml Aceton
160 ml Toluol

Während der folgenden 4 Stunden wurde dann der Rest der Zuläufe 1 und 2 kontinuierlich zudosiert und nach insgesamt 8 Stunden Polymerisationszeit der Ansatz gekühlt und mit 0,12 % 3-(3,5-Di-tert.-butyl-4-hydroxyphenyl)propionsäureoctadecylester als Antioxydans stabilisiert. Der Umsatz betrug 94 % der Monomeren.

### b) Herstellung der Formmasse (A)

In einem Rotationsverdampfer wurden unter Vakuum das Cyclohexan, Aceton, Toluol und Restmonomere entfernt und dann gegen andere Monomere und Zusätze ausgetauscht, so daß eine Mischung von 45 g 2,5-Bis(tert.-butylperoxy)-2,5-dimethylhexan, 1170 g des Acrylestercopolymerisats (A2), gelöst in 10380 g Styrol und 3450 g Acrylnitril, vorlag. Die Mischung wurde in einen Stahlkessel eingefüllt und unter Stickstoff und Rühren auf 87°C erhitzt. Nach einem Umsatz von ca. 20 % der Monomeren wurden 22,5 g tert.- Dodecylmercaptan und 18 g 3-(3,5-Di-tert.-butyl-4-hydroxyphenyl)propionsäureoctadecylester als Antioxydans zugegeben. Bei 33 % Umsatz der Monomeren erfolgte eine Zugabe von 15,4 Liter Wasser, 150 g Polyvinylpyrrolidon, 15 g Tetranatriumdiphosphat und 450 g einer 10 %igen wässrigen Polyvinylalkohol-Lösung. Die Mischung wurde 3 Stunden bei 110°C, weitere 3 Stunden bei 130°C und weitere 6 Stunden bei 140°C auspolymerisiert. Danach wurde gekühlt und das resultierende Polymer abfiltriert und getrocknet.

Der Oberflächenglanz eines Formteils aus einer Abmischung der Masse (A) als Mattierungsmittel mit einem ASA-Polymeren (P) ist in Tabelle 1 angegeben.

### Beispiel 5 (Herstellung von Formmasse (F) und Formteilen)

In einem Extruder ZSK 30 der Fa. Werner und Pfleiderer wurden Abmischungen von 70 Teilen des ASA-Polymeren (P) von Beispiel 1 mit jeweils 30 Teilen der Formmassen (A) der Beispiele 2 bis 4 als Mattierungsmittel bei 250°C und einem Durchsatz von 10 kg/ Stunde extrudiert.

Aus dem ASA-Polymeren (P) von Beispiel 1 und den hergestellten Polymermischungen (AB) wurden bei 220°C und einer Formtemperatur von 30°C Rundscheiben gespritzt und deren Oberflächenglanz wie oben angegeben bestimmt. Die Ergebnisse zeigt Tabelle 1.

**Tabelle 1**

| Oberflächenglanz von Formteilen aus ASA-Polymer (P) sowie deren Mischungen mit Massen (A) | | | | |
|---|---|---|---|---|
| | 1 (Vergleich) | 2 | 3 | 4 |
| Teile ASA-Polymer P von Beispiel 1 | 100 | 70 | 70 | 70 |
| Teile Formmasse (A) von: | | | | |
| Beispiel 2 | 0 | 30 | 0 | 0 |
| Beispiel 3 | 0 | 0 | 30 | 0 |
| Beispiel 4 | 0 | 0 | 0 | 30 |
| Oberflächenglanz(%) | 85 | 20 | 8 | 19 |

### Beispiel 6 (Herstellung einer matten Formmasse (A))

### a) Herstellung eines Acrylesterpolymerisats (A2)

1868 g Toluol wurden in einen Kolben eingefüllt, unter Stickstoff und Rühren auf 75°C erhitzt und anschließend 41 g einer Monomerenmischung aus 89,7 % n-Butylacrylat, 2,3 % Allylmethacrylat und 8 % Glycidylmethacrylat, sowie 41 mg Azobisisobutyronitril zugegeben. Dann wurden während der folgenden 4 Stunden 787 g einer Monomerenmischung der gleichen Zusammensetzung und 777 mg Azobisisobutyronitril zudosiert. Nach weiteren 4 Stunden Polymerisationszeit wurde der Polymerisationsansatz abgekühlt und mit 19 g 3-(3,5-Di-tert.butyl-4-hydroxyphenyl)propionsäureoctadecylester als Antioxydans stabilisiert. Der Umsatz betrug 92 %.

### b) Herstellung der Formmasse (A)

In einem Rotationsverdampfer wurden unter Vakuum das Toluol und ggf. vorhandenes Acrylestermonomeres der Stufe a) entfernt und dann soviel Styrol und Acrylnitril sowie ein Copolymeres aus 73,5% Styrol, 24,5 % Acrylnitril und 2% Maleinsäureanhydrid (Polymeres A1Pf) zugegeben, daß eine Mischung aus 7,8 % Acrylesterpolymerisat (A2), 7,8 % Copolymeres (A1Pf) sowie 84,4 % eines Monomerengemischs (A1m) von Styrol und Acrylnitril (Gew.verhältnis 75 : 25) resultierte. Das Acrylester-Copolymerisat war in der Mischung gelöst. 1923 g der Lösung wurden in einen 5-Liter-Stahlkessel eingefüllt und unter Rühren auf 123°C erhitzt. Bei einem Umsatz von 20 % der Monomeren wurden 1,49 g tert. Butylmercaptan und 2,31 g 3-(3,5-Di-tert.-butyl-4-hydroxyphenyl)propionsäureoctadecylester als Antioxydans zugegeben. Bei einem Monomerenumsatz von 33 % wurden zugegeben 1,9 g Dicumylperoxid, 1900 g Wasser, 20 g Polyvinylpyrrolidon, 1,0 g Tetranatriumdiphosphat und 59,8 g einer 10 %igen wässrigen Polyvinylalkohol-Lösung. Der Polymerisationsansatz wurde 3 Stunden bei 110, 3 Stunden bei 130°C und 6 Stunden bei 140°C auspolymerisiert. Danach wurde gekühlt, das Polymere abfiltriert und getrocknet. Die erfindungsgemäße Formmasse (A) war matt, hatte eine Schlagzähigkeit bei 23°C von 37 kJ/m², eine Kerbschlagzähigkeit bei 23°C von 2,6 kJ/m² und einen Schmelzindex von 7,4 ml/10 min.

Die Schlagzähigkeit wurde bestimmt nach DIN 53 453-K, Ausgabe 5/75, die Kerbschlagzähigkeit nach DIN 53 4534-K, Ausgabe 5/75, und zwar an kleinen Normstäben, die bei 240°C Schmelztemperatur (Formtemperatur 60°C) gespritzt wurden.

Der Schmelzindex wurde ermittelt nach DIN 53 735 bei 200°C und 21,6 kg Belastung.

## Patentansprüche

1. Für die Herstellung von Formteilen mit vermindertem Oberflächenglanz geeignete Formmassen (F) auf der Basis von Polymeren oder Polymermischungen (P), die in hinreichender Menge eine Formmasse (A) auf Basis eines Pfropfcopolymerisats als Mattierungsmittel eingemischt enthalten, dadurch gekennzeichnet, daß die Formmasse (A) hergestellt wurde durch ein- oder mehrstufige Polymerisation einer Mischung (AM) enthaltend
a) ein oder mehrere die Pfropfschale (A1) bildende olefinisch ungesättigte Monomere (A1m), die ein Polymerisat oder Copolymerisat mit einer Glasübergangstemperatur von mindestens +20°C bilden,
b) ein in dem oder den Monomeren (A1m) gelöstes oder gequollenes fertiges Acrylesterpolymerisat (A2) als Pfropfgrundlage, das eine Glasübergangstemperatur von unter -20°C aufweist,
wobei die Polymerisation der Mischung (AM) zumindest in der ersten Stufe und bis zu einem Umsatz von mehr als 15 Gew.% der Monomeren als thermisch oder radikalisch initiierte Polymerisation in Substanz oder in Lösung durchgeführt wurde.

2. Formmassen (F) nach Anspruch 1, dadurch gekennzeichnet, daß zur Herstellung der Formmasse (A) die Polymerisation der Mischung (AM) bis zu einem Umsatz von mehr als 20 Gew.% der Monomeren als thermisch oder radikalisch initiierte Polymerisation in Substanz oder Lösung durchgeführt wurde.

3. Formmassen (F) nach Anspruch 1 oder 2, dadurch gekennzeichnet, daß das für die Herstellung der Formmasse (A) verwendete Acrylesterpolymerisat (A2) neben mindestens einem Monomeren (A2m1) der Formel CH₂ = CR¹ - COOR², worin R¹ ein Wasserstoffatom oder eine Methylgruppe und R² einen Alkylrest mit 1 bis 12 C-Atomen bedeuten, ein Monomeres (A2m2) mit zwei nichtkonjugierten olefinisch ungesättigten C=C-Doppelbindungen in einer Menge von 0,3 bis 12 Gew.%, bezogen auf das Acrylesterpolymerisat (A2), einpolymerisiert enthält.

4. Formmassen (F) nach einem der Ansprüche 1 bis 3, dadurch gekennzeichnet, daß das für die Herstellung der Formmasse (A) verwendete Acrylesterpolymerisat (A2) ein olefinisch ungesättigtes Monomeres (A2m3) mit einer chemisch-reaktiven Gruppe (A2m3x) in einer Menge von 1 bis 25 Gew.%, bezogen auf das Acrylesterpolymerisat, einpolymerisiert enthält und den Monomeren (Alm) in der Mischung (AM) in einer Menge von 1 bis 25 Gew.% der Gesamtmonomerenmenge in der Mischung (AM) ein Monomeres (A1mf) und/oder ein Polymeres (A1Pf) zugesetzt ist, von denen jedes mindestens eine chemisch-reaktive Gruppe enthält, die mit den chemisch-reaktiven Gruppen (A2m3x) des Acrylesterpolymerisats (A2) reagieren kann oder die mit Hilfe eines der Mischung (AM) zugesetzten chemisch-reaktiven Vernetzers (AMV) eine Kopplung mit den chemisch-reaktiven Gruppen (A2m3x) des Acrylesterpolymerisats ermöglicht.

5. Formmassen (F) nach einem der Ansprüche 1 bis 4, dadurch gekennzeichnet, daß das für die Herstellung der Formmasse (A) verwendete Acrylesterpolymerisat (A2) mindestens ein olefinisch ungesättigtes Monomeres (A2m4) einpolymerisiert enthält, das bei thermischer Zersetzung Radikale bildet und die Polymerisation von olefinisch ungesättigten Monomeren initiieren kann.

6. Formmassen (F) nach einem der Ansprüche 1 bis 5, dadurch gekennzeichnet, daß die für die Herstellung der Formmasse (A) in der Mischung (AM) verwendeten Monomeren (A1m) Polymere bzw. Copolymere bilden, die mit den Polymeren bzw. Polymermischungen (P) voll oder teilweise verträglich sind.

7. Formmassen (F) nach einem der Ansprüche 1 bis 6, dadurch gekennzeichnet, daß die für die Herstellung der Formmasse (A) in der Mischung (AM) verwendeten Monomeren (A1m) überwiegend aus Alkenylaromaten, Nitrilen der Acrylsäure bzw. Methacrylsäure und/oder niederen Alkylmethacrylaten bestehen.

8. Formmassen (F) nach einem der Ansprüche 1 bis 7, dadurch gekennzeichnet, daß die Polymeren bzw. Polymermischungen (P) ASA-Polymere oder Mischungen derselben darstellen oder enthalten.

9. Formmassen (F) nach einem der Ansprüche 1 bis 7, dadurch gekennzeichnet, daß die Polymeren bzw. Polymermischungen (P) Copolymere sind oder enthalten, die in grösseren Mengen Alkenylaromaten, Nitrile der Acrylsäure oder Methacrylsäure und/ oder niedere Alkylmethacrylate einpolymerisiert enthalten.

## Claims

1. A molding material (F) suitable for the production of shaped articles having reduced surface gloss, and based on polymers or polymer blends (P), which contain, in admixed form and in sufficient amount, a molding material (A) based on a graft copolymer as a dulling agent, wherein the molding material (A) was prepared by one-stage or multistage polymerization of a mixture (AM) containing
a) one or more olefinically unsaturated monomers (A1m) which form the graft shell (A1) and form a polymer or copolymer having a glass transition temperature of at least +20°C, and
b) as the grafting base, a prepared acrylate polymer (A2) which is dissolved or swollen in the monomer or monomers (A1m) and has a glass transition temperature of less than -20°C,
at least the first stage of the polymerization of the mixture (AM) being carried out, to a conversion of more than 15 % by weight of the monomers, by thermal or free radical mass or solution polymerization.

2. A molding material (F) as claimed in claim 1, wherein, for the preparation of the molding material (A), the polymerization of the mixture (AM) was carried out, to a conversion of more than 20 % by weight of the monomers, by thermal or free radical mass or solution polymerization.

3. A molding material (F) as claimed in claim 1 or 2, wherein the acrylate polymer (A2) used for the preparation of the molding material (A) contains, in addition to at least one monomer (A2m1) of the formula CH₂ = CR¹ - COOR², where R¹ is hydrogen or methyl and R² is alkyl of 1 to 12 carbon atoms, a monomer (A2m2) having two nonconjugated olefinically unsaturated C=C double bonds in an amount of from 0.3 to 12 % by weight, based on the acrylate polymer (A2) as polymerized units.

4. A molding material (F) as claimed in any of claims 1 to 3, wherein the acrylate polymer (A2) used for the preparation of the molding material (A) contains, as polymerized units, an olefinically unsaturated monomer (A2m3) having a chemically reactive group (A2m3x) in an amount of from 1 to 25 % by weight, based on the acrylate polymer, and from 1 to 25 % by weight, based on the total amount of monomers in the mixture (AM), of a monomer (A1mf) or a polymer (A1Pf) are added to the monomers (A1m) in the mixture (AM), each monomer (A1mf) or each polymer (A1Pf) containing a chemically reactive group which is capable of reacting with the chemically reactive groups (A2m3x) of the acrylate polymer (A2) or which, with the aid of a chemically reactive crosslinking agent (AMV) added to the mixture (AM), permits coupling with the chemically reactive groups (A2m3x) of the acrylate polymer.

5. A molding material (F) as claimed in any of claims 1 to 4, wherein the acrylate polymer (A2) used for the preparation of the molding material (A) contains, as polymerized units, at least one olefinically unsaturated monomer (A2m4) which forms free radicals on thermal decomposition and is capable of initiating the polymerization of olefinically unsaturated monomers.

6. A molding material (F) as claimed in any of claims 1 to 5, wherein the monomers (A1m) used for the preparation of the molding material (A) in the mixture (AM) form polymers or copolymers which are completely or partially compatible with the polymers or polymer blends (P).

7. A molding material (F) as claimed in any of claims 1 to 6, wherein the monomers (A1m) used for the preparation of the molding material (A) in the mixture (AM) predominantly comprise alkenyl aromatics, nitriles of acrylic acid or methacrylic acid or lower alkyl methacrylates.

8. A molding material (F) as claimed in any of claims 1 to 7, wherein the polymers or polymer blends (P) are or contain ASA polymers or mixtures thereof.

9. A molding material (F) as claimed in any of claims 1 to 7, wherein the polymers or polymer blends (P) are or contain copolymers which contain, as polymerized units, relatively large amounts of alkenyl aromatics, nitriles of acrylic acid or methacrylic acid or lower alkyl methacrylates.

## Revendications

1. Masses de moulage (F) appropriées pour la préparation de pièces moulées à éclat superficiel réduit, à base de polymères ou de mélanges de polymères (P) qui, en une quantité suffisante, contiennent comme agent de matage incorporé une masse de moulage (A) à base d'un copolymère de greffage, caractérisées en ce que la masse de moulage (A) est préparée par polymérisation en une ou plusieurs étapes d'un mélange (AM) contenant
a) un ou plusieurs monomères (A1m) oléfiniquement insaturés qui réalisent l'enveloppe de greffage (A1) et qui forment un polymère ou copolymère ayant une température de transition vitreuse d'au moins +20°C,
b) un polymère d'ester acrylique (A2) fini, dissous ou gonflé dans le ou les monomères (A1m), qui présente une température de transition vitreuse inférieure à -20°C, comme base de greffage,
la polymérisation du mélange (AM) étant, au moins dans la première étape et jusqu'à un degré de transformation de plus de 15% en poids du monomère, effectuée sous la forme d'une polymérisation en masse ou en solution qui est amorcée thermiquement ou par voie radicalaire.

2. Masses de moulage (F) suivant la revendication 1, caractérisées en ce que, pour la préparation de la masse de moulage (A), la polymérisation du mélange (AM) est effectuée jusqu'à un degré de transformation de plus de 20% en poids des monomères sous la forme d'une polymérisation en masse ou en solution qui est amorcée thermiquement ou par voie radicalaire.

3. Masses de moulage (F) suivant l'une des revendications 1 et 2, caractérisées en ce que le polymère d'ester acrylique (A2) utilisé pour la préparation de la masse de moulage (A) contient à l'état copolymérisé, à côté d'au moins un monomère (A2m1) de la formule CH₂ = CR¹ - CORR², dans laquelle R¹ représente un atome d'hydrogène ou un groupe méthyle et R² un radical alkyle ayant 1 à 12 atomes de C, un monomère (A2m2) comportant deux doubles liaisons C=C non conjuguées, oléfiniquement insaturées, en une quantité de 0,3 à 12% en poids, par rapport au polymère d'ester acrylique (A2).

4. Masses de moulage (F) suivant l'une des revendications 1 à 3, caractérisées en ce que le polymère d'ester acrylique (A2) utilisé pour la préparation de la masse de moulage (A) contient à l'état copolymérisé un monomère oléfiniquement insaturé (A2m3) comportant un groupe chimiquement réactif (A2m3x) en une quantité de 1 à 25% en poids, par rapport au polymère d'ester acrylique, et en ce qu'au monomère (A1m) est ajouté, en une quantité de 1 à 25% en poids de la quantité totale de monomère dans le mélange (AM), un monomère (A1mf) et/ou un polymère (A1Pf) dont chacun contient au moins un groupe chimiquement réactif qui peut réagir avec les groupes chimiquement réactifs (A2m3x) du polymère d'ester acrylique (A2) ou qui permet, à l'aide d'un agent de réticulation (AMV) chimiquement réactif ajouté au mélange (AM), un couplage avec les groupes chimiquement réactifs (A2m3x) du polymère d'ester acrylique.

5. Masses de moulage (F) suivant l'une des revendications 1 à 4, caractérisées en ce que le polymère d'ester acrylique (A2) utilisé pour la préparation de la masse de moulage (A) contient à l'état copolymérisé au moins un monomère oléfiniquement insaturé (A2m4) qui forme des radicaux lors d'une décomposition thermique et qui peut amorcer la polymérisation de monomères oléfiniquement insaturés.

6. Masses de moulage (F) suivant l'une des revendications 1 à 5, caractérisées en ce que les monomères (A1m) utilisés pour la préparation de la masse de moulage (A) dans le mélange (AM) forment des polymères ou des copolymères qui sont totalement ou partiellement compatibles avec les polymères ou mélanges de polymères (P).

7. Masses de moulage (F) suivant l'une des revendications 1 à 6, caractérisées en ce que les monomères (A1m) utilisés pour la préparation de la masse de moulage (A) dans le mélange (AM) sont constitués d'une manière prépondérante de substances aromatiques alcényliques, de nitriles de l'acide acrylique ou de l'acide méthacrylique et/ou de méthacrylates d'alkyle inférieurs.

8. Masses de moulage (F) suivant l'une des revendications 1 à 7, caractérisées en ce que les polymères ou mélanges de polymères (P) représentent ou contiennent des polymères ASA ou des mélanges de ceux-ci.

9. Masses de moulage (F) suivant l'une des revendications 1 à 7, caractérisées en ce que les polymères ou mélanges de polymères (P) sont ou contiennent des copolymères qui contiennent à l'état copolymérisé en grandes quantités des substances aromatiques alcényliques, des nitriles de l'acide acrylique ou de l'acide méthacrylique et/ou des méthacrylates d'alkyle inférieurs.
